# EUROPEAN PATENT APPLICATION

(11) **EP 1 387 296 A1**
(43) Date of publication of application: **04.02.2004**
(21) Application number: 02354108.9
(22) Date of filing: 10.07.2002
(51) Int. Cl.: G06F 17/30

(54) **Distributed file system**

(71) Applicant: Hewlett-Packard Company, Palo Alto, CA 94304 (US)
(72) Inventor: Richard, Bruno, 38920 Crolles (FR); Chalon, Denis, 38000 Grenoble (FR)
(74) Representative: Lloyd, Richard Graham (GB)

(57) **Abstract**

The invention relates to a distributed file system and method for distributing files between computing devices (10-22) of at least one group of computing devices (10-22) in which files are distributed automatically upon the networking of two or more computing devices (10-22). In the preferred embodiment, the user is not required to invoke any file distribution application as this is effected automatically. Advantageously, all files in a shared file directory are distributed to all computers (10-22) in the group and stored in a usable format such that every computer (10-22) is able to read and write to a shared file even when not networked to other computers (10-22) in the group. File distribution is preferably carried out in a non-specific manner and in a one-for-all manner. The system is very suitable for networks with low connectivity patterns between the computers.

## Description

### Field of the Invention

The present invention relates to a distributed file system for distributing files within at least one group of computers.

### Background of the Invention

For many years there have been systems for distributing files within groups of computers, typically computer networks. A typical arrangement involves the provision of a server within the network which allows access to filed stored therein by a plurality of computers connected in the network. The files are typically stored in the server and managed thereby.

Another form of file distribution creates replicas of files onto individual computers within a network. The replicas can be worked upon at the individual computers. Replication improves the performance and availability in distributed networks by allowing access to the data even when some of the replicas or network links are not available. Performance is also improved by allowing access to nearby replicas and thereby avoiding expensive remote network access and can also improve throughput of work by allowing a plurality of sites able to work upon data simultaneously. Traditionally, replication has been used in local area networks to ensure the availability of critical functions, including database systems and files. The evolution of mobile computers, including personal digital assistants (PDAs) and remote distributed systems provided by, for example, the Internet, makes replication almost a necessity.

The provision of file replicas in a distributed system creates issues of managing the content of files where this content is likely to be modified at different and disconnected computers. In order to manage this issue various replication algorithms have been developed by a plurality of companies including, for example, DNS, Usenet, CVS, Lotus Notes.

The existing replication algorithms can be said to fall within one of two categories. The first, sometimes known as "pessimistic replication algorithms" relies upon single copy usability in which the general concept is to prohibit access to a replica unless it can be proven to be fully up-to-date. This is generally done by categorising one replica as a primary replica which is then responsible for managing the request for a particular object. All the other sites (computers) within the group act as secondary sites which are only entitled to receive changes from the primary site, that is the primary replica. Other systems serialise the updates by locking all replicas and updates them only at the same time.

While such "pessimistic replication algorithms" work well, they are not particularly suited to wide area networks because they tend to be slow and unreliable. Of course, they also have an effect on availability of data in that with an increasing number of replicas there is a reduction in the availability to write (modify) those replicas as a result of tight write control.

The other category of replication algorithms can be thought of as "optimistic replication". This category allows users to access any file replica at any time based upon the assumption that conflicting updates of files are rare and that when there is a conflict this can be resolved by the user(s). One of the principal features which distinguishes optimistic replication algorithms from pessimistic replication algorithms is that any replica can be read or written to (modified) directly most of the time and that any updated replica can then be propagated throughout the network with any conflicts being resolved as and when necessary. As will be immediately appreciated by the skilled person, conflicts occur when two or more users have modified the same file in different ways, for which it is then necessary to determine either which modification should stand or how the two modifications should be taken into account to create a single modified file.

Optimistic replication algorithms are suitable for computer networks which are not always connected, such as networks created by the Internet or which involve one or more mobile computing devices. In addition, they generally do not require expensive computers, such as an expensive server, as a standard computing device is often all that is required.

Optimistic replication algorithms generally seek to serialise updates of a file in order to try to determine the time sequence of updates and thereby to determine the most up-to-date version of a file within a network. Furthermore, they also have to ensure that the updates are received in the network to ensure that they can then be distributed as required. The determination of the timing of updates can be problematic because computer clocks are invariably unreliable, with the result one cannot necessarily be determined for certain the time or order when any update has been effected, particularly when updates on two different computers have been made at approximately the same time according to the clocks of those two computers (which are unlikely to be synchronised).

Furthermore, there are issues of file storage in terms of which versions of a replica should be kept. Generally, known replication algorithms will maintain only the most up-to-date version of the replica and discard "older" versions as being of no further relevance. While this might work satisfactorily on the whole, they risk loosing updates which one or more users may actually wish to retain.

In practical terms, the existing replication algorithms are run as and when a user wishes to obtain a file replica. For this purpose, the user would typically invoke the replication algorithm to obtain a copy of the relevant file and then read and/or write to the replica as desired. Of course, in order to be able to achieve this, the user must be able to obtain a replica of the relevant file at the time of the request, in other words needs to be connected to the relevant computer network.

Another example of an existing replication algorithm is a system known as "Reconcile" of the Mitsubishi Electric Research Laboratory. This system compares file directories of computers within a network, finds the differences and updates those directories so that all of the directories contain the same files. It carries out this process automatically, requiring user intervention only when there are unavoidable conflicts between the versions of files stored in different locations (computers). Updating is accomplished by using a journal of past updates for each directory. Any older version of a file is deleted if the journals indicate that a newer version of the file was derived directly from the older version. The journal file which is produced by each site will generally contain the action performed upon the file, the file name and a time stamp (produced with reference to the computer clock).

### Summary of the Present Invention

The present invention seeks to provide an improved distributed file system.

According to an aspect of the present invention, there is provided a method of distributing files between computing devices of at least one group of computing devices including the step of performing a file reconciliation routine at periodic intervals automatically upon the networking of at least two of said computing devices.

In the preferred embodiment, there is no need for a user to invoke specifically any reconciliation algorithm or application linked to the files being reconciled, this being carried out automatically. Thus, upon the simple networking of two or more computers, file reconciliation takes place. This has the additional advantage that the user does not need to carry out specific file reconciliations when he/she requires those files. This embodiment could be described as providing file reconciliation in a manner which is invisible to the user and which requires no specific user input to initiate file reconciliation.

Preferably, the method includes the step of controlling at least one of said computing devices to transmit file reconciliation data periodically irrespective of its or their connectivity to other computing devices. This feature can provide for substantially immediate file reconciliation upon the networking of computing devices together, without requiring any form of handshaking routine or the like.

Advantageously, the method provides in said computing devices at least one shared files directory into which shared files are automatically stored. These shared files are typically file replicas. Preferably, such a shared files directory is a directory directly accessible by the software applications of any user's computing device. Of course, in the preferred embodiment, the user has direct access to any distributed files simply by invoking a particular software application, for example a word processing application, and then opening the relevant distributed file (in practice a replica thereof) without ever having to invoke any specific file distribution reconciliation application before having access to the distributed files.

It can be seen that with this embodiment that distributed files can, in practice, be accessed as if they were standard files in the computing device.

In the preferred embodiment, all of the shared files are distributed amongst all computers networked together such that each computing device has a complete replica of each shared file. Thus, even when a computing device is removed from the network the user of that device can still work upon all of the shared files, having replicas of these stored in the memory of his/her computing device. The user is not restricted to having to re-connect to the network or to some other server in order to have access to all of the shared files.

According to another aspect of the present invention, there is provided a method of distributing files between computing devices of at least one group of computing devices including the steps of issuing file data to unspecified computers within the group and receiving file data from unspecified computers within the group.

In the preferred embodiment, a computing device is deemed to form part of the group when provided with group identification data specific to the group or specific to the device. In practice, in the preferred embodiment, this enables a network to be created without having to have knowledge of computers in the network and which is able to propagate data throughout the network in a non-computer specific manner. For example, one computer may issue file data into the network which can be read by any other computer connected to the network at that point in time and is able to receive data from any computer connected in the network even though the data received has not been generated by the computer sending such data. The system could be described as being "epidemic" in the manner of dissemination of file data. This has the advantage that even though a computer which has effected a particular modification to a file is disconnected from the network, that modified file data can be propagated (distributed) to all the other computers connected to the network by any other computer which has already received that modified file data. Thus, file data can be distributed to all the computers without requiring any specific computer connectivity. Furthermore, as is explained below, it is possible to create a networked system wherein some computers within the network are never connected together, with file distribution being carried out by one or more computers which eventually connect to both sets of computers.

In the preferred embodiment, the method includes the step of transmitting a journal of file history for each shared file from one computer into the network. The other computers in the network are able to determine from the journal which versions of the file they do not have and therefore require. The method preferably includes the step of other computers in the network requesting only those versions of the file which they do not have. In the case where data transmission is not computer specific, it will be apparent that any computer within the network which has a requested file version is able to provide that file version to the network and thus to the computer device requesting it.

In the preferred embodiment, a file journal includes a code indicative of the contents of each file version in the journal. Thus, if there has been an operation performed on a file which does not change that file's contents, the journal code will indicate this and that therefore other networked computers need not request that unmodified version of the file if they already have stored an equivalent version of that file.

Advantageously, the method includes the step of dividing files into a plurality of portions or chunks for data transfer. Preferably, each portion or chunk is given a contents code, the method including the step of transmitting only those chunks which have been modified. In practice, this can be achieved by any computer requiring a particular file version determining which chunk or chunks it requires to recreate that file version in its memory and requesting only that or those chunks.

In the preferred embodiment, the method includes the step of providing in each computing device an accessible list of chunks stored therein and the step of determining whether a chunk requested is stored in that device from the list of accessible chunks. In this manner, if a computing device has a particular modified chunk, for example as a result of having previously received a different version of a modified file, it is able to recreate a new modified version of the file from data already stored therewithin.

Preferably, the method includes the step of storing file versions in usable formats. This includes also previous versions of files and incomplete files, that is files which have not been completely transferred to the device as a result of, for example, loss of data during transfer or removal of the computing device from the network before completion of file transfer. Thus, the user is not deprived of any file data.

According to another aspect of the present invention, there is provided a distributed file system for distributing files between computing devices of at least one group of computing devices including a file reconciliation unit operable to reconcile files between computing devices at periodic intervals automatically upon the networking of said computing devices.

According to another aspect of the present invention, there is provided a distributed file system for distributing files between computing devices of at least one group of computing devices including a transmission unit operable to issue file data to unspecified computers within the group and a receiving unit operable to receive file data from unspecified computers within the group.
According to another aspect of the present invention, there is provided a computer network including a distributed file system or operable by a method of distributing files as herein specified.

According to another aspect of the present invention, there is provided a software application for distributing files stored on or in a memory device, which software application is operable to perform the method specified herein.

It will be apparent from the teachings herein that the embodiments of distributed file system disclosed herein are not reliant upon any server set up but allow a decentralised self-organising architecture which does not exhibit any single point of failure. It will also become apparent from the description below that the preferred embodiment of system runs automatically in a manner similar to a daemon which does not require the user to have to invoke a third party application interface to commence file distribution. It also allows the distribution of files through networks which are only loosely connected and which in some instances may never be completely connected together at the same point in time.

### Description of the Drawings:

Embodiments of the present invention are described below, by way of example only, with reference to the accompanying drawings in which:
Figure 1 shows an example of a loosely connected network of computing devices set up to operate the preferred embodiment of distributed file system;
Figure 2 shows an embodiment of architecture for two computing devices set up to operate the preferred embodiment of distributed file system;
Figure 3 shows an example of file journals of two computers A and B;
Figure 4 is a flow chart of an embodiment of communication protocol for the system of Figures 1 to 3;
Figure 5 is a flow chart of an embodiment of message handling routine;
Figure 6 is a flow chart of an embodiment of file reconciliation routine for the architecture of Figure 2;
Figure 7 is a timing chart showing the communication and reconciliation routines of Figures 4, 5 and 6;
Figure 8 shows an embodiment of file directory arrangement for the system of Figure 1.

### Description of the Preferred Embodiments:

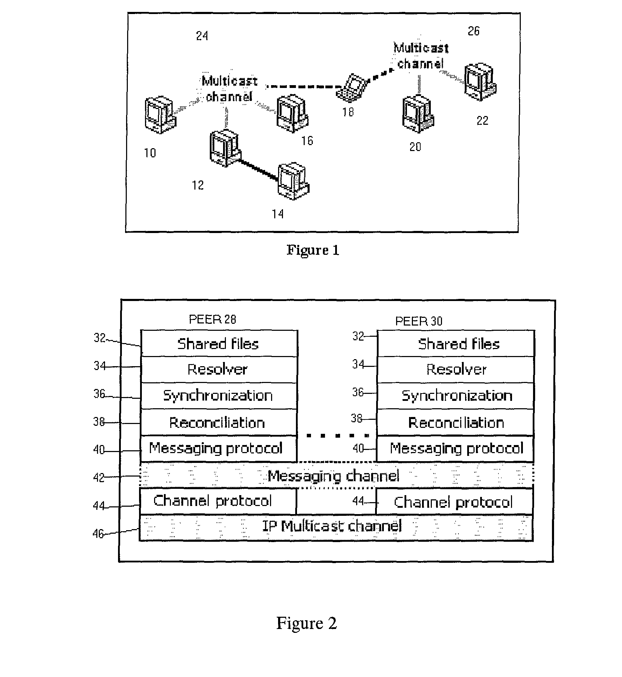

In the example of computer network shown in Figure 1, there are provided seven computers 10 to 22, four of which, namely computers 10 to 16, are connected together in a network via a Multicast channel 24. Similarly, computers 20 and 22 are connected together in a network by their own Multicast channel 26. The computers 10-16 and 20-22 are not directly coupled to one another. A portable computing device 18 can link with either one of both of the groups of computers 10-16 and 20-22. The computers 10-16 may, for example, be part of a workplace computer network while the computers 20-22 may be part of a home computer system.

The distributed file system of the preferred embodiment enables all of the computers 10-22 of the example of Figure 1 to share all of the files which have been classified as shared files, irrespective of the state of connectivity of the computers 10-22 to one another at any one specific point in time. In the application shown in Figure 1, for example, the user(s) may wish to work at times on the portable computer 18 and to share files around the network 10-16 and also to work on computers 20-22 with those shared files. The distributed file system of the preferred embodiment enables distribution of all the relevant files to all the computers 10-22 such that each of these computers has the full complement of shared files. An operator is therefore able to use any one computer to work on any one of the shared files.

In practice, replicas of the files will be stored on each of the computers 10-22 and then, upon being linked again in the network, the various replicated files are reconciled with one another as required. The preferred embodiment ensures that any modifications made to the shared files on any one device are automatically distributed to all of the other computers connected in the network. Thus, in the example shown in Figure 1, when the portable computer 18 is connected to the network formed by computers 10-16, it will have transferred into its memory all of the shared file modifications from those computers and will share its shared file contents with those computers 10-16. When disconnected from the network of computers 10-16 the user of computer 18 has full access to the shared files stored therewithin such that he/she can both read those files and modify them. When, for example, the portable computer 18 is linked to the computers 20-22, it will transfer automatically the modified shared files from computers 10-16 and also the modifications made on the portable computer 18. In addition, any file modifications made at computers 20 or 22 not yet stored in the portable computer 18 will be transferred to the portable computer 18, such that all computers within the network 10-22 will progressively receive all of the file modifications.

As will become apparent below, it is irrelevant which computers 10-22 are linked to one another at any point in time as all file modifications will be transferred to all of the computers in a progressive manner. The preferred embodiment provides, for maximum performance, a weakly consistent update policy which does not place any limits on file modification permissions even when network access is not available. This enables update conflicts to occur, in which different users may independently modify a particular file replica to create a plurality of distinct but equally valid versions of a particular file. However, as will become apparent below, the preferred embodiment operates what could be termed a "no lost updates" reconciliation policy in which updates are not deleted from any computer immediately, such that every user is provided with access to every update for reference purposes. Furthermore, the preferred embodiment stores all file updates in a usable format. For example, text files are all stored in a version in which they can be accessed by a user both for reading and for writing purposes.

The embodiments of system disclosed herein are suitable for connecting a wide variety of computer devices together, such as personal computers, portable computers, personal digital assistants (PDAa) and any other computerised device designed and able to handle files. Furthermore, although Figure 1 shows an example in which a computer network is created by wired connections, other examples can use wireless links such as 802.11 and Bluetooth ^{(™)}. Of course, a computer network can also be created through telecommunications links, such as the Internet, cellular and satellite telephony systems and so on.

Figure 2 shows an embodiment of distributed file system architecture set up in two computers denoted peer 28 peer 30. The peers 28, 30 may be any two of the computers 10-22 shown in Figure 1. Each peer 28, 30 is provided with a series of shared files 32, being typically located in a shared file directory. In addition, each peer 28, 30 is provided with a resolver algorithm 34 for handling conflict resolution; a synchronisation algorithm 36 for synchronising file replicas; a reconciliation algorithm 38 for reconciling file versions between computers; a messaging protocol 40 for transferring messages between the computers 28, 30 via a messaging channel 42 and a channel protocol 44 operable, in the embodiment described, via an IP Multicast channel. All these elements are described in detail herein.

The example of architecture shown in Figure 2 is provided within the distributed file system algorithm stored within each computer 10-22 of the network. The architecture of this embodiment uses a communication channel 46 which provides for communication from one computer to all of the other computers within the network at that point in time. This embodiment uses IP Multicast as a transport layer on which to construct a communication channel. Although this makes for a channel which can sometimes lose information, this is not an issue in the embodiments described because each computer is able eventually to acquire the data it needs. Indeed the channel protocol 44 is able to tolerate three types of channel unreliability: (limited) loss (finite) duplication and reordering (all of which are inherent to the IP Multicast protocol). This particular messaging protocol provides message buffering, chunking and reconstruction as well as packet duplication and reordering at the lower level. Persons having knowledge of the IP Multicast protocol will know that it includes a congestion control mechanism based on carrier-sensing and random back-off times which reduces the probability of broadcast collisions and saturation of the Multicast channel. The higher level of this channel sees a standard lossy first-in-first-out (FIFO) one-to-all broadcast channel with buffering in the form of input and output queues.

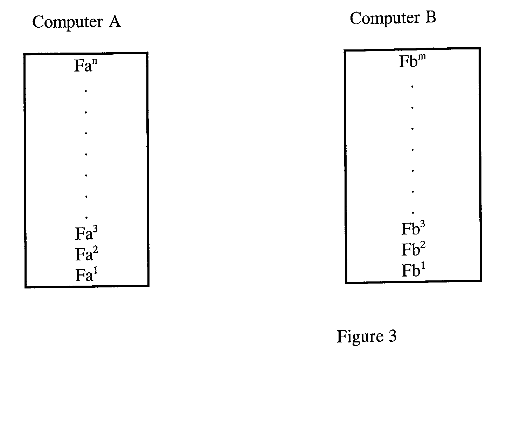

The channel protocol 44 of this embodiment divides messages to be transmitted into blocks, which are then transmitted indefinitely until a message receipt acknowledgement is received. This is explained in further detail in relation to Figures 3 to 6.

The messaging protocol 40 is non-computer specific. In other words, individual computers 10-22 have no knowledge of the total current group membership, that is of which computers are currently networked together and what is a total group of computers which are able to be networked. Acceptance of any computer 10-22 into the network is permitted, in this embodiment, upon the use of a valid password and encryption key to decrypt data transferred between computers 10-22 networked. Thus, no computer 10-22 is required to maintain a list of current or past computers either networked at a particular point in time or able to be networked, which removes a particular barrier to scalability compared to traditional distributed file systems. Furthermore, it is permissible for any computer 10-22 to be part of a plurality of different networks to share different sets of files, according to the user's needs.

In order to provide high tolerance to the possibly lossy nature of the messaging channel 42 and the variable rate of node connections, the messaging protocol 40 is preferably asynchronous and ignorant of session. Computers 10-22 within the network make no assumptions as to whether the other computers respond to a given message transmitted thereby as there is no requirement to provide any acknowledgement to a message which has been transmitted. As will become apparent from the teachings below, messages are simply sent and it is up to the computer(s) expecting to receive a message to determine whether or not that message has been received. This feature of the preferred embodiment can avoid an explosion in the number of messages which might otherwise occur.

Similarly, any computer 10-22 can be disconnected from the network at any point in time without the need for any formal signing-off procedure. Should that computer have an incomplete set of shared files, this set can be completed at any later point in time upon reconnection to that network or to any other network of computers which holds those shared files. Since, as explained above, files are stored in a usable format, even an incomplete set of shared files still provide usable files which can be read and/or written to.

In one embodiment, all messages in the messaging protocol 40 are in an XML format.

The reconciliation algorithm 38 is based upon reconciling filed data rather than file operation data such that every computer 10-22 within the network is eventually provided with all of the file data of the shared files and has full access to those files, both for reading and for writing, even when disconnected from the network.

The synchronisation algorithm 36 has the task of synchronising the file versions or replicas between the computers in the network 10-22. As is described below, synchronisation is based upon a file journal held in each computer for every shared file.

The resolver algorithm 34, described in detail below, has the task of seeking to determine whether or not there are conflicts in file versions, to resolve the conflicts if possible and to flag any non-resolvable conflicts to the user.

Referring to Figure 3, there is shown an example of two file journals for a file F held at two sites, one being computer A and the other being computer B. These computers A and B can be any one of the computers 10-22 of the example of network shown in Figure 1. Data relating to each version of file F is stored in its relevant journal in each of its computers A and B, in a sequential order. Thus, in the example shown at Figure 3, there are n versions of file F in computer A, the oldest version being file Fₐ¹ to the newest version, file Fₐⁿ. Similarly, computer B has its own journal for file F with the oldest version of file F as being F_{b}¹ and the most recent version being file F_{b}^{m}. In the preferred embodiment, the journals include for each version of file F a signature of the file rather than the entire file itself. Preferably, this signature can be based on a MD5 hash value of the file contents and a locally created time stamp (typically from the computer clock). This signature, as will be apparent to the skilled person, uniquely identifies the content of the file. For example, journal entry Fₐ¹ would be the signature of the first version of file F seen at computer A rather than the actual file contents. This ensures that each journal requires very little storage space.

The synchronisation algorithm 36 operates to transfer the journals of computers A and B to one another and the other computers then networked and then to compare the various journals to determine whether or not there has been a modification to file F which requires transmission to the computer which has not received that modification. In the example of Figure 3, the system will compare the journal received from computer A with its journal relating to file F and in particular the hash values (hereinafter referred to as signatures) of each version of file F. Where the signatures are equal, the files are identical and no synchronisation is required. Where the signatures are different, according to this example, the synchronisation algorithm of computer B will check for equality of signatures between the latest version of file F in the journal of computer A (that is Fₐⁿ) with one of the past versions of file F in the journal of computer B. In other words, to compare Fₐⁿ with the signature of each version of file F in the journal of computer B. If a match is found for example Fₐⁿ is equal to F_{b}^{k}, this means that computer B does have a direct descendant of an older version of file A from computer A. What this implies of course, is that computer A would require the more recent version or versions of file F from computer B. A similar mechanism applies in the opposite version, that is when computer B needs a more recent version of the file F from computer A.

In the case where both comparisons fail, that is that it is not possible to find a match of the latest version of file F in one of the computers A and B in the other, this is indicative of the fact that file F has been modified both at computers A and B and that therefore a conflict has occurred.

In the preferred embodiment, as is described in further detail below, files are divided into sub-file units, conveniently termed "chunks" in this description. Each chunk is given its own signature, preferably based on an MD5 hash value as is the file signature. As explained below, this provides a second opportunity for file synchronisation in which it is only necessary to synchronise chunks which have been modified and as a result provides simplified conflict resolution in which conflicts need only be resolved when the same chunk has been independently modified at two different computers.

In the preferred embodiment, there is no automatic resolution of conflicting updates. Instead, where an update conflict is detected, the most recent version of the file is kept in the main shared file directory and a new file is created containing the older filed contents and renamed, with a pendant thereto the old file signature. At the same time, a notification is sent to the user so that the user can resolve the conflict manually. It is considered that manual conflict resolution is better than automatic conflict resolution as the latter has the risk of losing valuable data.

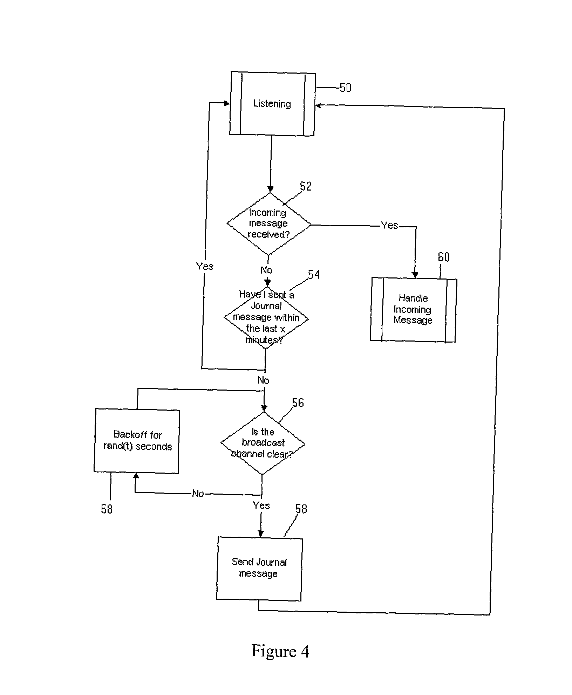

Referring now to Figure 4, there is shown an example of automated message transfer routine for the preferred embodiment of distributed file system. As explained above, the preferred embodiment provides automatic propagation of file updates to all networked computers without having to invoke specifically the file distribution application, as is required in many prior art systems. The example of Figure 4 is based upon the IP Multicast protocol but it will be immediately apparent to the skilled person how this example could be modified to be based upon other transfer protocols.

The routine shown in Figure 4 is performed by each computer 10-22 in the network, in the preferred embodiment whether or not that computer is connected to the network. With this latter feature, it is not necessary for any computer to know whether or not it is networked with other computers, which makes the routine substantially invisible to the user and can also be advantageous in wireless network applications.

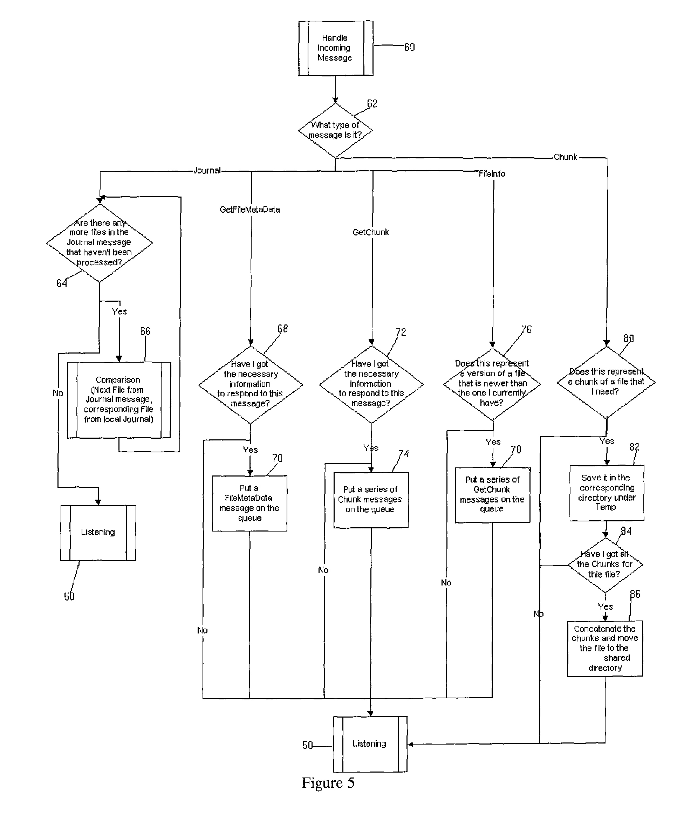

In Figure 4, the first step 50 of the routine involves continuous listening for incoming messages sent by other computers 10-22 connected in the network. At step 52 the routine determines whether or not an incoming message has been received. If such a message has been received the routine passes to routine 60 of Figure 5.
On the other hand, if at step 52 it is determined that no incoming message has been received, the routine passes to step 54 at which it is determined whether the computer has sent a journal message within a predetermined interval, typically in the last x minutes, where x can be set by the skilled person. This journal message is the list of file journals held by that computer.

If it is determined at step 54 that a journal message has been received within the last predetermined period, the routine returns to step 50 to continue listening for incoming messages transmitted by other computers 10-22 in the network. On the other hand, if at step 54 it is determined that the computer has not sent any journal message within the last x minutes, the routine proceeds to step 56 at which it is determined whether or not the broadcast channel is clear. If the broadcast channel is not clear, the routine passes to step 58 which provides a delay of a random number of seconds. The routine then passes again to step 56 and, once it is determined that the broadcast channel is clear, the routine passes to step 58 at which the journal message is transmitted from the computer to any other computer which may be networked thereto. The routine then passes back to step 50.

The routine of Figure 4 thus continues until an incoming message is received.

It will be apparent that in the preferred embodiment this routine is performed continuously without the computer determining whether it is networked to any other computer. The process can therefore be entirely invisible to the user. In an alternative embodiment, the routine of Figure 4 can provide for a handshaking procedure to determine whether the computer is networked to any other computer before carrying out the steps shown in Figure 4.

Referring now to Figure 5, there is shown an embodiment of routine for handling incoming messages by any of the computers 10-22 in the network.

The first step of the routine 60 is to determine what type of message has been received and this is carried out at step 62. In this embodiment, there are five types of message which may be received by any one of the computers 10-22. The message might be a journal message from one of the other computers, a Get FileMetaData message which is a request from another computer for FileMetaData; a get chunk message which is the request by another computer for a chunk of a file; a file information message relating to the version of a particular shared file; or a file chunk transmitted by another computer.

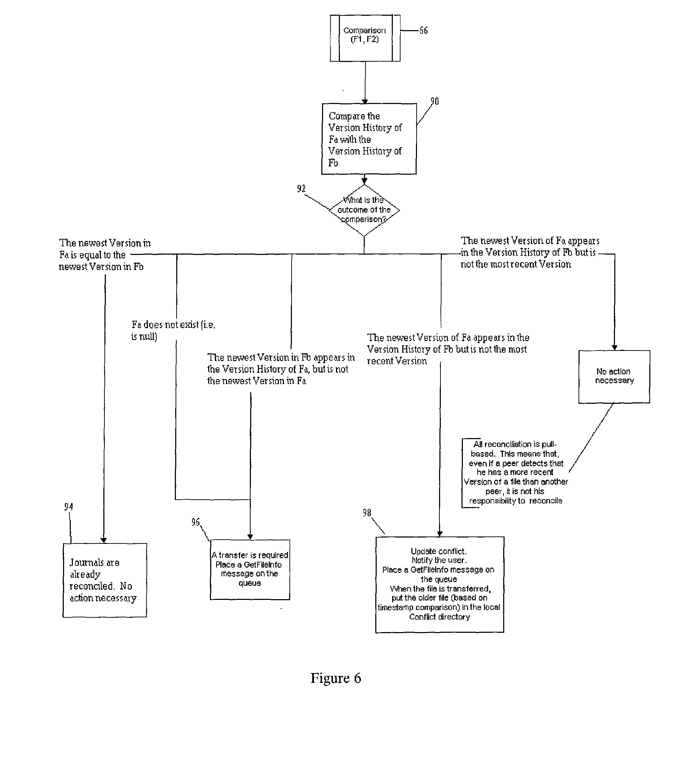

Where it is determined that the message is a journal message, the routine passes to step 64, at which it is determined whether there are any more file signatures in the journal message which have not yet been processed by the routine. If at step 64 it is determined that there are more file signatures to be processed, the routine passes to step 66, at which a comparison is made of the next file signature in sequence in that journal with the corresponding file signatures in that computer's local journal. The routine then returns to step 64. An example of a comparison routine is shown in Figure 6 and described below.

If at step 64 it is determined that there are no more file signatures in the journal message received which require processing, the routine passes to step 50, that is the listening step of the routine of Figure 4.

If at step 62 it is determined that the received message is a Get FileMetaData message, which is a request from another computer for the chunk signatures of the chunks forming that file, at step 68 it is determined whether the computer has the necessary information to respond to this message. It is not necessary in this routine for the computer which generated the particular version of the file for which the FileMetaData is requested to respond to the message. If the computer receiving the request has this data, then it has the information to respond to the Get FileMetaData message received. Thus, the request for data and the supply of the data is not specific to any one particular computer and is received by and can be processed by any one of the computers 10-22 in the network.

If it is determined at step 68 that the computer has the requested FileMetaData, then the computer puts that data in its transmission queue for transmitting that data at the appropriate time. On the other hand, if it is determined at step 68 that the computer does not have the requested information, then the routine passes to step 50 of Figure 4, that is back to its listening routine.

If at step 62 it is determined that the received message is a request for one or more chunks of a file, the routine passes to step 72, which can be considered analogous to step 68 with the difference that the computer determines whether or not it already has the requested chunk(s). If the computer has the requested chunk(s), the routine passes to step 74 at which the requested chunk(s) are placed on the data transmission queue for transmission at the appropriate time. The routine then returns to step 50 as it does if it is determined at step 2 that the computer does not have the requested chunk(s).

If at step 62 it is determined that the incoming message represents the information on a file, that is a file signature previously requested from a comparison routine 66, at step 76 the routine determines whether or not the file information received represents a version of a file which is newer then the most recent version of that file currently held in the computer. If so, at step 78, the routine places on the message queue a series of get chunk messages requesting the required chunks for that file. The routine then passes to step 50 to listen for further incoming messages, eventually the chunks requested. Similarly the routine passes straight to step 50 if it is determined at step 76 that the received file information is not required by that computer.

If it is determined at step 62 that the received message represents a chunk of a file, the routine passes to step 80, at which it is determined whether the received chunk represents a chunk of a file that is needed by that computer. In this regard, in one embodiment, the system is designed so that each computer keeps a list of all the signatures of all the chunks stored therein. When it is determined that a new version of a file has been created which was required by that computer, the computer determines, via the routines shown in the attached drawings, which chunks it is missing of any such newly modified file. Before issuing a request for the missing chunks, the system determines whether the computer already has those chunks by checking the required chunk signatures against the list of signatures of the chunks already stored in the computer. Where it is determined that the computer already has one of the required chunks, for example in another file, then a get chunk request is not issued on the basis that this is not necessary. This can have significant implications in terms of data transfer requirements and in practice can be a valuable feature. For example, where a file is renamed or a chunk from a file is used in another file, the contents of the file or at least of that chunk still exists in the computer and does not need to be obtained from another computer. It will be appreciated that the simple renaming of a file can create a different file signature in prior art systems and a request for file information which strictly speaking is not necessary.

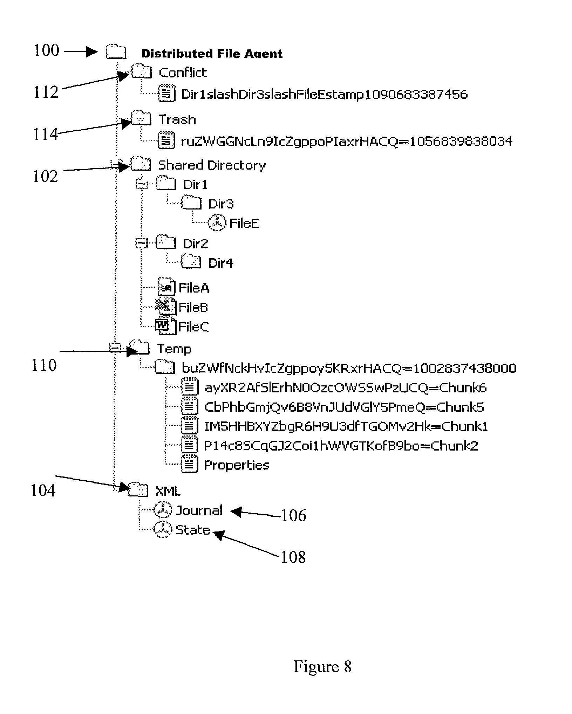

Returning to Figure 5, if at step 80 it is determined that the received chunk is not required by the computer, the routine passes straight to step 50 of Figure 4 to continue listening for other transmitted messages. On the other hand, if at step 80 it is determined that the chunk is a chunk required by the computer, the routine passes to step 82 at which the chunk is stored in a related temporary directory set up for that file, as is described below in connection with Figure 8.

Following step 82, the routine passes to step 84 at which it is determined whether all the chunks for the particular file sought to be reconstituted in the computer have been received. If this is not the case, the routine passes to step 50 to listen for further chunks being transmitted. On the other hand, if at step 84 it is determined that all of the chunks have been received to reconstitute a particular file, the routine passes to step 86 at which all the chunks are concatenated to reconstitute the file and that file is then moved to the shared directory, described in further detail below with respect to Figure 8.

In the preferred embodiment, steps 70, 74 and 78 include a sub-step of checking the outgoing messages in the queue(s) to determine whether they are still up to date with respect to received messages, so that if a requested data has been received the relevant get message instruction in the queue(s) is deleted. More specifically, in this embodiment, when an incoming message of the data type Get FileMetaData, GetChunk, FileInfofc or Chunk is received, it is determined whether in the respective outgoing message queue 70, 74, 78 there is a message request for the received data. If so, that message request is deleted from the message queue.

An embodiment of comparison routine shown at step 66 in Figure 5 is shown in Figure 6 (in the example of Figure 6 computer B is deemed to be the computer receiving a file journal from computer A). This routine provides a comparison of the received journal message with the journal for that file stored in the computer, of the type shown in Figure 3 and described above. In the routine of Figure 6, the first step is step 90 at which the journal or version history of file Fₐ of computer A is compared with the journal or file version history of file F stored in computer B. If it is determined at step 92 that the result of the comparison is that the newest version of the file in computer A is the same as the newest version of that file in computer B, it is determined at step 94 that the journals are already reconciled and that therefore no action is required. In practice, the routine would then pass back to step 64 of Figure 5.

On the other hand, if at step 92 it is determined that there is no journal for file F stored in computer B, then it is determined at step 96 that a transfer is required and a get file information message is placed on the message transmission queue. The routine then passes to step 50 to listen out for file information messages.

If it is determined at step 92 that the newest version of file F in computer B appears in the journal or file version history received from computer A but is not the newest version of that file in the journal of computer A, then the routine passes to step 96 to place a get file information message on the message transmission queue.

If at step 92 it is determined that the newest version of the file F from the journal of computer A does not appear in the journal for file F in computer B and that the newest version of that file F in computer B does not appear in the journal for the file F of computer A, it is determined at step 98 that there is an update conflict, that is that file F has been updated independently at both computers A and B. In this case, at step 98, the user is notified of conflict and a get file information message is placed on the queue to obtain the newest version of file F from computer A. When the file is transferred to computer B, the time stamps of the two newest versions of the file F are compared and the version which appears the oldest is placed in the local conflict directory (shown in Figure 8 and described in further detail below). The apparently older version of file F is not deleted from computer B in case the user wishes to resolve the conflict in a manner other than simple time of the particular version of file F and also to ensure that there is no error caused by lack of synchronisation of the clocks of the two computers A and B.

If at step 92 it is determined that the newest version of the file F in computer A appears in the journal for file F of computer B but that computer B has a more recent version of file F, no action is taken, that is computer B does not seek to send out the file information of its version of file B to computer A. The reason for this is that in this embodiment all reconciliation is achieved by an advertised "publish and subscribe" virtual channel in which each individual computer determines what it needs from other computers and what it needs to transmit to other computers and manages this internally. Thus, the responsibility to reconcile the files on computer A lies with computer A when it receives the journal of computer B, either directly from computer B or from any other computer on the network.

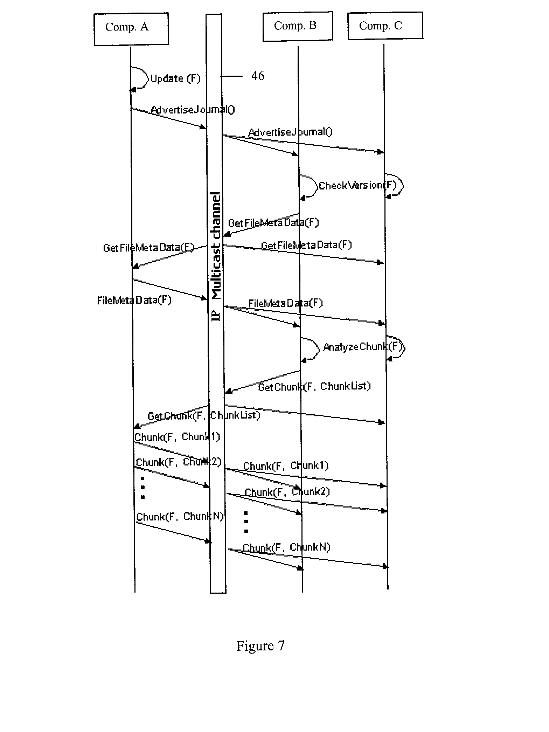

Figure 7 shows a message transfer flow chart involving three computers A, B and C which may be any three computers in the network of computers 10-22 shown in the example of Figure 1.

In the flow chart of Figure 7, the example looks at a file F which has been updated at computer A. Computer A periodically broadcasts its journal message which contains the version histories of all the files in its local shared directory. Computers B and C run the routines of Figures 4 to 6 to check locally and independently whether the journal transmitted by computer A contains a version of file F which they have not yet received.

It can be seen that computer B transmits a Get FileMetaData (file signature) message for file F, which is transmitted to all of the computers then networked together. Computer C notes that computer B has issued a Get FileMetaData request and suppresses its own message, which otherwise it would have transmitted.

Computer A divides file F into a number of chunks and computes an SHA-1 hash value of the contents of each chunk, that is a signature specific to each chunk. It then transmits a file MetaData message which lists the hashes of each chunk together with the identification of that chunk.

Upon receipt of the file MetaData message, computer B (or computer C) issues a sequence of get chunk messages requesting the hash code for each required chunk. Upon receipt of those messages, computer A transmits a sequence of chunk messages, containing the chunk contents.

The messaging protocol of the preferred embodiment can provide efficient transfer of large files whose contents have changed only slightly as only those chunks which have been modified are requested by the receiving computer. Certain operations, such as operations which change the name of the file, can be handled as a "delete/create" combination at the operation level but without the need to transfer the contents of the file because that would already be stored in the computer under the old file name.

In a similar manner, file delete operations are treated, in the preferred embodiment, explicitly during file reconciliation. In other words, if one computer deletes a file off-line, the journal of that computer will include an entry relating to that deletion with a hash value of 0 so that the file is not then recreated upon the subsequent reconnection between a network of computers which still retain that deleted file as an active file.

Figure 8 shows an example of shared file directory system for managing shared files and file transfers. The agent 100, which is typically stored in a folder 100 of a computer operating system, provides a shared file directory 102 in which shared files and any shared sub-directories are stored. This shared directory can be accessed directly from software applications of the computer. For example, for a word processing document, it is simply necessary for the user to open the word processing software application and to look for the file to open through the normal file opening procedure. As the file distribution system operates automatically in the background it is not necessary for the user to invoke the file distribution agent when wishing to access this shared file.

The agent 100 also includes an XML directory 104 which includes the file journals 106 and operation states 108.

Two examples of files Journal.xml and State.xml are as follows. State.xml contains a list of every file currently stored in the local shared directory, along with a time stamp which indicates the date on which that file was last modified. The format could be as follows:

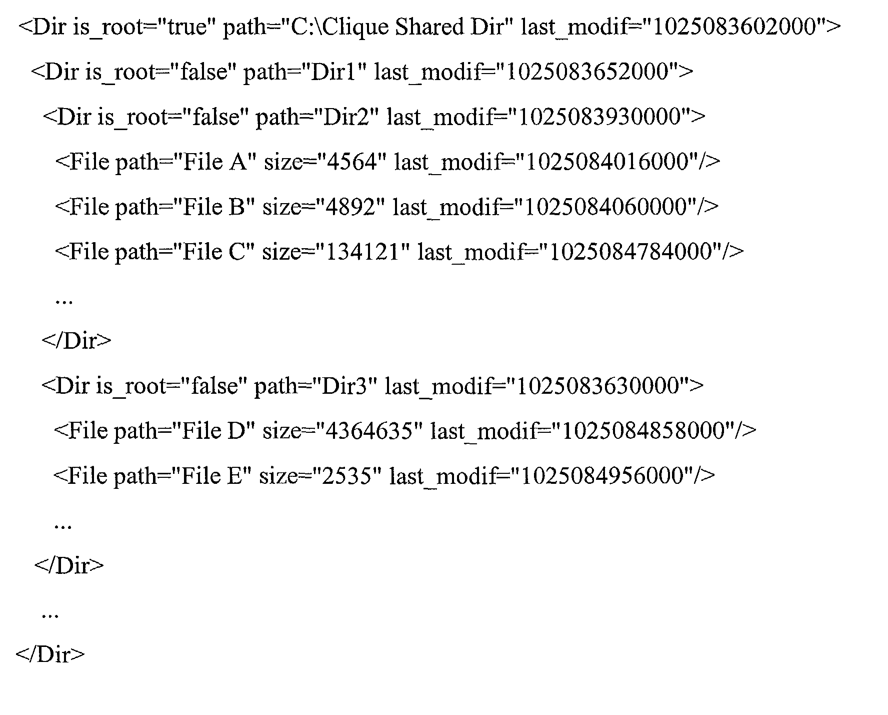

The file has a hierarchical structure, that is the full pathname of file E of the above example is: "C:\SharedDir\Dir1\Dir3\FileE".

The State file 108 is used by the periodic update checker algorithm to detect when a non-trivial update (that is, write/delete/create) has been performed on a file in the shared directory 102. Basically, the algorithm runs through every file in the shared directory 102 and its corresponding entry in the State file 108; if either the size or the time stamp has been changed since the last update check, then it is determined that the file contents has changed and an update has occurred. If an entry in the State file 108 no longer has a corresponding file/directory in the shared directory 102, it is determined that the file/directory has been deleted. If there is a file/directory in the shared directory 102 that is not listed in the State file 108, it is determined that the file/directory has been created.

Renaming of files in this example can be detected as a delete/create combination.

The Journal file 106 is the local computer's journal, as transmitted to other computers during an AdvertiseJournal message. It contains the versions of every file ever known by this local computer (within the last 30 days in the given example), including deleted files. Consequently it will tend to be a much larger file. The format in this example is as follows:

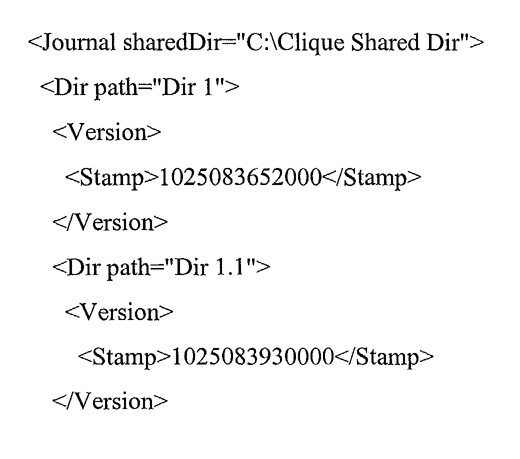

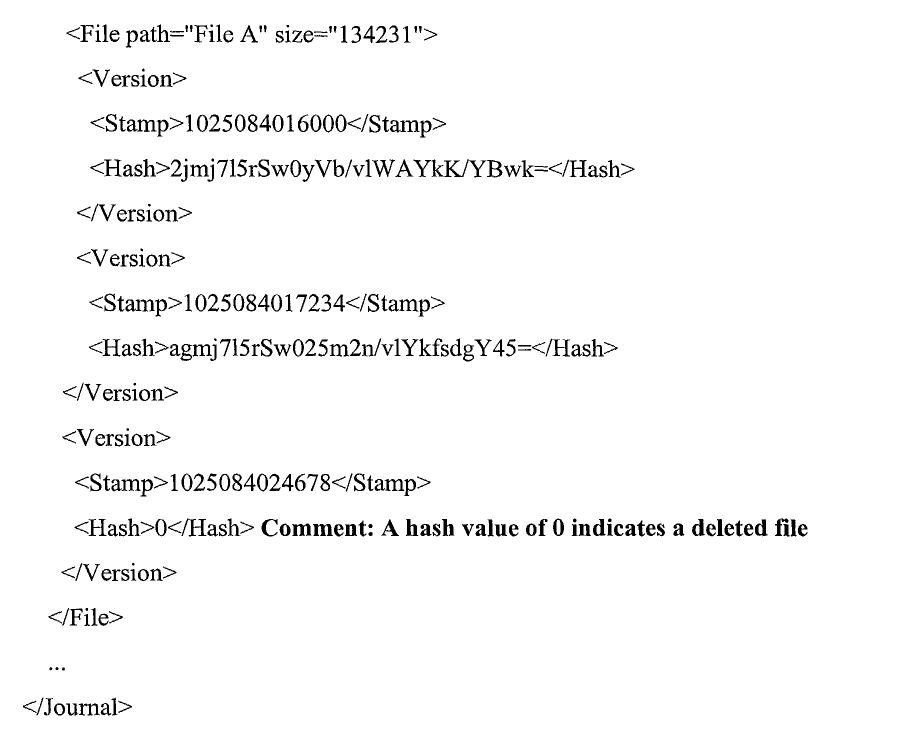

This is also used during the version comparison algorithm (Figure 6), which is launched when an AdvertiseJournal message is received from another computer; by comparing the local Journal.xml file 106 to the received Journal, updates are detected as explained above.

Furthermore, the distributed file agent 100 includes a temporary directory 110 which stores data relating to files being transferred. In the example shown in Figure 8, a file having the file signature buZWfNckHvIcZgppoy5KRxrHACQ=1002837438000, which represents both the hash value and the time stamp, which together form a unique signature for that particular file version, is stored therein while the chunks constituting that file are being received by the computer. It can be seen in Figure 8 that chunks 6, 5, 1 and 2 have been received so far. Once all of the chunks have been received and it is determined that the file is complete, that file is then transferred to the shared directory 102 or to the relevant sub-directory, as appropriate.

Where it is determined that a conflict exists between two versions of a modified file, the file having the apparently newest time stamp and therefore being apparently the latest update of that file, is stored in the shared directory 102 and the file having apparently the older of the two time stamps and therefore being apparently the older of the two versions of the file is stored in conflict directory 112. The apparently older file version is not deleted but retained for a predetermined time period for use by the user. A typical time period may be 30 days but could be any period deemed appropriate and possibly settable by the user. It will be noted that in the example shown in Figure 8, the filename of the file in the conflict directory 112 "Dir1slashDir3slashFileEstampXYZ" is consequently more user-friendly in order to facilitate manual resolution.

The example shown in figure 8 includes a trash folder 114 which is used to store files that have been deleted, for two reasons:
1. Users may delete a file inadvertently and thus the folder allows such inadvertently deleted files to be recovered. This is important in the context of the system taught herein because, for example, user A may delete a file without realising that user B may still want to be able to access this file. Trash folder 114 at least allows user B to recover that file, which would otherwise also be deleted automatically from his/her local directory.
2. As described above, the polling-based system used in the described embodiment detects "rename" operations as sequential "delete" and "create" operations. In order to avoid inefficient unnecessary file transfer which could result from this, a computer 10-22 which intends to perform a GetFile operation will first check to see if that file is recoverable from its local Trash folder 114. This is a small optimisation that substantially reduces network bandwidth usage for renamed files.

It is possible that a computer will not receive all of the required data to reconstitute a version of the file requested, in practice all of the required chunks. In the preferred embodiment, should a computer fail to receive a complete file, the file data received up to the point of cessation of reception of that file data, for example disconnection of the computer from the network, what has been received is retained in the temporary directory. This has the advantage that when the computer is reconnected to the network it can continue requesting the missing chunks from whichever computer then connected to the network has that data. The file can thus be completed as and when required. However, in this example, if upon reconnection to the system it is determined that there is yet a newer version of the file, it is preferable that that newer version of the file is obtained with the incomplete previous version retained in the temporary directory 110.

In order not unnecessarily to waste memory capacity within the computer, it is preferred that all files stored in the temporary directory are deleted after a predetermined period of time, such as 30 days. The same can be the case with the files stored in the trash directory 114 and also with old versions of files stored in the computer and in the journals for that file. The period of storage of the files can be dependent upon the memory capacity of any one computer within the network and can vary from computer to computer within the network.

It will be apparent from the above description that the embodiments of system described can provide a file-sharing environment which is substantially invisible to the user. The files are shared automatically without user input. Similarly, files are transferred in an epidemic manner which enables data to be received from any computer then networked which has the data required and which is not dependent upon any knowledge of which computers are connected on the network or of which computer has generated the data in the first place. This system is particularly suited for networks which have loose connectivity, where some computers only connect for short periods of time and where some computers are never physically connected together in the network but which nevertheless are able to share the same files through intermediate computers, in the example shown a portable computer.

The system does not rely upon synchronisation of computer clocks and indeed although the embodiment described above makes use of a time stamp to try to sort between conflicting modifications of a file, the use of such a time stamp is not necessary because both conflicting files can be stored in the conflict directory, for example, and notified to the user.

The system also provides an inherent mechanism for file convergence even when a network is loosely connected in that even portions of modified files are stored for completion at a future point in time. Similarly, all files remain usable in any one computer so as to allow complete accessibility to the shared files. Of course, since each computer is eventually provided with a complete set of shared files, it is possible for any one computer to work on any of the shared files when disconnected from the network.

It will also be apparent that the described embodiments do not require a server to operate and therefore do not have any single point of failure. Of course, the embodiments could be used with a server based system in which a server controls a series of slaves in a sub-network connected to a network operating on the basis of the system described herein.

It is envisaged that an implemented system will have platform independence and can therefore be compatible with all operating systems. This is achieved in the preferred embodiments by basing the system on a hierarchical file system paradigm, in which a directory can contain one or several directories, in addition to one or several files. Each file is referenced by a file name associated to its file contents, along with a last modification date. Such a paradigm is in concordance with current operating systems such as Windows(™), Unix(™), Linux(™), Windows CE(™), Solaris(™) and so on it will work on them.

The journal kept by each computer of a particular file history can either be updated at periodic intervals or only upon a change to a file. In the latter case, where there has been an operation such as a file save operation performed by a user, which does not alter the contents of the file, it is not necessary to create a new journal entry.

## Claims

1. A method of distributing files between computing devices (10-22) of at least one group of computing devices including the step of performing a file reconciliation routine at periodic intervals automatically upon the networking of at least two of said computing devices.

2. A method according to claim 1, including the step of controlling at least one of said computing devices (10-22) to transmit file reconciliation data periodically irrespective of its or their connectivity to other computing devices.

3. A method according to claim 1 or 2, including the step of providing in said computing devices (10-22) at least one shared files directory into which shared files are automatically stored.

4. A method according to claim 3, wherein the at least one shared files directory is directly accessible by software applications stored in the computing devices (10-22).

5. A method according to any preceding claim, including the step distributing all shared files amongst all computers networked together.

6. A method according to claim 1, wherein all distributed files can be read from and written to in any of said computing devices (10-22).

7. A method according to any preceding claim, including the steps of issuing file data to unspecified computers (10-22) within the group and receiving file data from unspecified computers (10-22) within the group.

8. A method of distributing files between computing devices (10-22) of at least one group of computing devices including the steps of issuing file data to unspecified computers (10-22) within the group and receiving file data from unspecified computers within the group.

9. A method according to claim 8, including the step of accepting a computer (10-22) as a computer of said at least one group on the basis of the provision of group identification data specific to the group or specific to the device.

10. A method according to any preceding claim, including the step of transmitting a journal of file history for each shared file from one computer into the network.

11. A method according to claim 10, including the step of a computing device requesting only file versions not stored therein.

12. A method according to claim 10 or 11, wherein a file journal includes a code indicative of the contents of each file version in the journal.

13. A method according to any preceding claim, including the step of dividing files into a plurality of portions for data transfer.

14. A method according to claim 13, wherein each file portion is provided with a contents code, the method including the step of transmitting only those file portions which have been modified.

15. A method according to claim 13 or 14, including the step of providing in each computing device an accessible list of file portions stored therein and the step of determining whether a file portion required is stored therein from the list of accessible file portions.

16. A method according to any preceding claim, including the step of storing file versions in a format in which they can be read from and written to.

17. A distributed file system for distributing files between computing devices (10-22) of at least one group of computing devices (10-22) including a file reconciliation unit operable to reconcile files between computing devices at periodic intervals automatically upon the networking of said computing devices.

18. A distributed file system for distributing files between computing devices (10-22) of at least one group of computing devices (10-22) including a transmission unit operable to issue file data to unspecified computers (10-22) within the group and a receiving unit operable to receive file data from unspecified computers within the group.

19. A computer network including a distributed file system according to claim 17 or 18 or operable by a method of distributing files according to any one of claims 1 to 16.

20. A software application for distributing files stored on or in a memory device, which software application is operable to perform the method according to any one of claims 1 to 16.
